(19) Europäisches Patentamt
European Patent Office
Office européen des brevets

(11) **EP 2 591 978 A2**

(12) **EUROPEAN PATENT APPLICATION**

(43) Date of publication:
**15.05.2013 Bulletin 2013/20**

(51) Int Cl.:
***B62D 5/065*** *(2006.01)* ***B62D 5/09*** *(2006.01)*

(21) Application number: **12191183.8**

(22) Date of filing: **03.11.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **14.11.2011 JP 2011248995**

(71) Applicant: **JTEKT CORPORATION**
**Osaka-shi**
**Osaka 542-8502 (JP)**

(72) Inventors:
• **Izutani, Keisuke**
**Osaka-shi, Osaka 542-8502 (JP)**
• **Sakamaki, Masahiko**
**Osaka-shi, Osaka 542-8502 (JP)**

(74) Representative: **Winter, Brandl, Fürniss, Hübner, Röss, Kaiser, Polte - Partnerschaft**
**Bavariaring 10**
**80336 München (DE)**

(54) **Power steering system**

(57) A power steering system includes: a hydraulic cylinder (21) that generates a steering assist force; a hydraulic control valve (40) that has a spool (71) that adjusts the state of supply and drainage of the hydraulic fluid to and from the hydraulic cylinder (21) based on a position of the spool (71); a driving unit that displaces the spool (71) by driving the spool (71) with a predetermined driving force; and a determination unit that determines that there is an abnormality in the hydraulic control valve (40) when the driving force for displacing the spool (71) falls outside a predetermined range.

ABNORMAL-TIME STOP PROCESS

DETECT DRIVING CURRENT VALUE Ia FOR ELECTRIC MOTOR, WHICH IS REQUIRED TO DISPLACE SPOOL UNTIL TARGET ROTATION ANGLE $\theta t$ IS ACHIEVED — S210

ESTIMATE TORQUE Ta OF ELECTRIC MOTOR BASED ON DRIVING CURRENT VALUE Ia — S220

S230
Ta-Tt > $\alpha$ ? — NO

YES

DETERMINE THAT THERE IS ABNORMALITY IN HYDRAULIC CONTROL VALVE — S240

OPEN BYPASS VALVE — S250

END

Fig. 7

EP 2 591 978 A2

## Description

BACKGROUND OF THE INVENTION

Field of the Invention

The invention relates to a power steering system that includes a hydraulic cylinder that generates a steering assist force, a hydraulic control valve that has a spool that adjusts the state of supply and drainage of hydraulic fluid to and from the hydraulic cylinder on the basis of a position of the spool, and a driving unit that displaces the spool by driving the spool with a predetermined driving force.

Discussion of Background

In a power steering system described in Japanese Patent Application Publication No. 2006-306239 (JP 2006-306239 A), a spool of a hydraulic control valve is rotated by an electric motor by a predetermined rotation angle from a neutral position to change the state of supply and drainage of hydraulic fluid to and from a hydraulic cylinder. In this way, a steering assist force generated by the cylinder is controlled. The value of a driving current for the electric motor, which is required to displace the spool from the neutral position by the predetermined rotation angle, is calculated on the basis of, for example, a detected value of a steering torque of a steering shaft, which is detected by a torque sensor, and a detected value of a vehicle speed. By controlling the driving current value for the electric motor in this way, the steering assist force that is generated by the hydraulic cylinder is adjusted on the basis of the operating state of a vehicle.

When an abnormality has occurred in the hydraulic control valve, for example, when the rotation axis of the spool is tilted or when foreign matter is caught in the spool, the abnormality should be quickly detected during the operation of the vehicle so that appropriate steering assistance is provided.

Note that the hydraulic control valve that controls the state of supply and drainage of the hydraulic fluid to and from the hydraulic cylinder by displacing the position of the spool in its rotation direction is described above. However, the above-described technical challenge exists also in a power steering system that includes a hydraulic control valve that executes the above-described supply/drainage control by displacing the position of a spool in its axial direction along which the spool is reciprocated.

SUMMARY OF THE INVENTION

The invention provides a power steering system that is able to detect an abnormality that has occurred in a hydraulic control valve even during an operation of a vehicle.

According to a feature of an example of the invention, it is determined that an abnormality has occurred in a hydraulic control valve when a driving force for displacing a spool falls outside a predetermined range.

According to another feature of an example of the invention, when an abnormality has occurred in the hydraulic control valve, a stop unit executes an abnormal-time stop process for stopping generation of a steering assist force.

BRIEF DESCRIPTION OF THE DRAWINGS

The foregoing and further objects, features and advantages of the invention will become apparent from the following description of example embodiments with reference to the accompanying drawings, wherein like numerals are used to represent like elements and wherein:

FIG. 1 is a view that shows the overall configuration of a power steering system according to an embodiment of the invention;
FIG. 2 is a schematic view that shows a hydraulic cylinder while a steering assist force PA is generated;
FIG. 3 is a schematic view that shows the hydraulic cylinder while a steering assist force PB is generated;
FIG. 4 is a graph that shows the correlation between an actual rotation angle of a spool and a generated steering assist force;
FIG. 5 is a flowchart that shows the procedure of a steering assist force changing process;
FIG. 6 is a graph that shows the correlation among a steering torque, a vehicle speed and a target rotation angle of the spool;
FIG. 7 is a flowchart that shows the procedure of an abnormal-time stop process;
FIG. 8 is a graph that shows the correlation between a driving current value for an electric motor and a torque; and
FIG. 9 is a graph that shows the correlation between a target rotation angle of the spool and a torque in a power steering system according to another embodiment of the invention.

DETAILED DESCRIPTION OF EMBODIMENTS

Hereinafter, embodiments of the invention will be described with reference to the accompanying drawings.

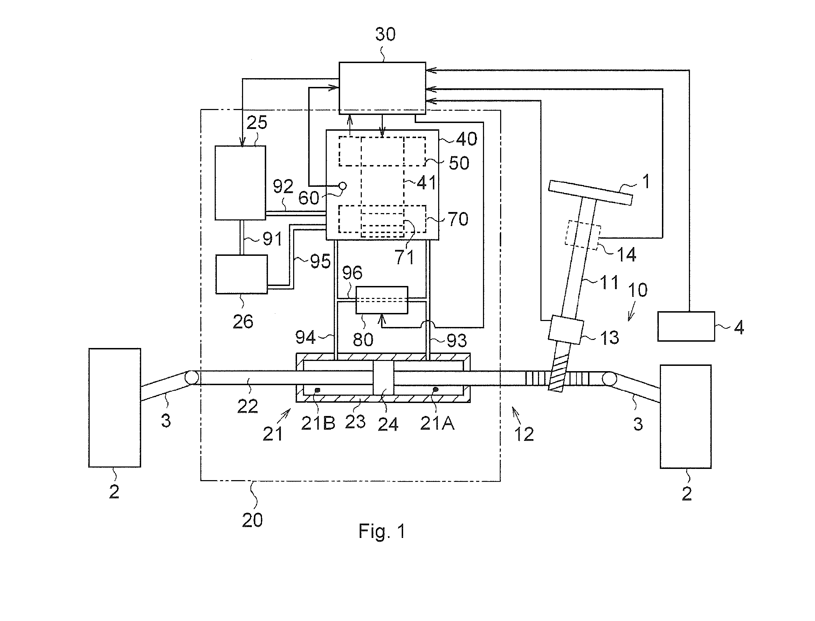

The overall configuration of a power steering system according to the invention will be described with reference to FIG. 1. The power steering system includes a steering device 10, an assist device 20 and a control unit 30. The steering device 10 transmits an operation of a steering wheel 1 to steered wheels 2. The assist device 20 generates a steering assist force required to assist an operation of the steering wheel 1. The control unit 30 controls the assist device 20. The control unit 30 includes a processor that executes various computation processes, and a memory that stores computation programs, computation maps, and the like.

The steering device 10 includes a steering shaft 11, a rack-and-pinion mechanism 12 and tie rods 3. The steering shaft 11 rotates together with the steering wheel 1. The rack-and-pinion mechanism 12 converts the rotation of the steering shaft 11 into a linear motion. The tie rods 3 connect the rack-and-pinion mechanism 12 to the steered wheels 2. A torque sensor 13 and a steering angle sensor 14 are provided on the steering shaft 11. The torque sensor 13 detects a steering torque $\tau$ applied to the steering shaft 11. The steering angle sensor 14 detects a steering angle $\theta$s and a rotation direction RX of the steering shaft 11. In addition, a vehicle includes a vehicle speed sensor 4 that detects a vehicle speed V on the basis of the rotation speed of the steered wheels 2.

The torque sensor 13 outputs a signal, which corresponds to the steering torque $\tau$ applied to the steering shaft 11, to the control unit 30. The steering angle sensor 14 outputs a signal, which corresponds to the steering angle $\theta$s and the rotation direction RX of the steering shaft 11, to the control unit 30. In addition, the vehicle speed sensor 4 outputs a signal, which corresponds to the vehicle speed V, to the control unit 30.

The assist device 20 includes a hydraulic cylinder 21, an electric hydraulic pump 25 and a hydraulic control valve 40. The hydraulic cylinder 21 generates a steering assist force. The hydraulic pump 25 is used to supply hydraulic fluid drawn from a reservoir 26 to the hydraulic cylinder 21. The hydraulic control valve 40 controls the state of supply and drainage of the hydraulic fluid to and from the hydraulic cylinder 21.

The hydraulic cylinder 21 includes a rack shaft 22 and a housing 23. The rack shaft 22 is displaced in its axial direction in accordance with an operation of the rack-and-pinion mechanism 12. The housing 23 supports the rack shaft 22 such that the rack shaft 22 is able to make a reciprocating motion. The internal space of the housing 23 is partitioned into a pair of hydraulic chambers, that is, a first hydraulic chamber 21A and a second hydraulic chamber 21B, by a piston 24 provided on the rack shaft 22.

The hydraulic control valve 40 includes an electric motor 50, a shaft 41, a rotation angle sensor 60 and a hydraulic control unit 70. The electric motor 50 functions as a driving unit for driving the hydraulic control valve 40. The shaft 41 is a rotary shaft of the electric motor 50. The rotation angle sensor 60 detects a rotation angle of the shaft 41. The hydraulic control unit 70 includes a spool 71 that adjusts the state of supply and drainage of the hydraulic fluid to and from the hydraulic cylinder 21 on the basis of the rotation angle of the spool 71. The spool 71 is formed at part of the shaft 41. In addition, the shaft 41 is rotatably supported by a bearing (not shown) provided in the hydraulic control valve 40. Therefore, the rotation angle sensor 60 detects an actual rotation angle

$\theta$a of the spool 71 by detecting the rotation angle of the shaft 41. A plurality of ports (not shown) is formed at the periphery of the spool 71. The ports are used to change the state of communication between the hydraulic pump 25 and reservoir 26, and the hydraulic cylinder 21.

The hydraulic control valve 40 changes the state of supply and drainage of the hydraulic fluid to and from the hydraulic cylinder 21 among a first state, a second state and a neutral state. In the first state, the hydraulic fluid is supplied to the first hydraulic chamber 21A, while the hydraulic fluid is drained from the second hydraulic chamber 21B. In the second state, the hydraulic fluid is supplied to the second hydraulic chamber 21B, while the hydraulic fluid is drained from the first hydraulic chamber 21A. In the neutral state, the hydraulic fluid is supplied to neither the first hydraulic chamber 21A nor the second hydraulic chamber 21B. Furthermore, the hydraulic control valve 40 adjusts the amount of hydraulic fluid that is supplied to the first hydraulic chamber 21A when the supply/drainage state of the hydraulic fluid is the first state or adjusts the amount of the hydraulic fluid that is supplied to the second hydraulic chamber 21B when the supply/drainage state of hydraulic fluid is the second state. In this way, the steering assist force generated by the hydraulic cylinder 21 is controlled. Note that the hydraulic control valve 40 drains the hydraulic fluid from the first hydraulic chamber 21A and the second hydraulic chamber 21B when the supply/drainage state of hydraulic fluid is the neutral state.

In addition, the above-described hydraulic control valve 40, hydraulic cylinder 21, reservoir 26 and hydraulic pump 25 are connected to each other via a plurality of oil passages. That is, the reservoir 26 and the hydraulic pump 25 are connected to each other via an introduction passage 91, while the hydraulic pump 25 and the hydraulic control valve 40 are connected to each other via a discharge passage 92. Furthermore, the hydraulic control valve 40 is connected to the first hydraulic chamber 21A of the hydraulic cylinder 21 via a first supply passage 93, while the hydraulic control valve 40 is connected to the second hydraulic chamber 21B of the hydraulic cylinder 21 via a second supply passage 94. Furthermore, the hydraulic control valve 40 and the reservoir 26 are connected to each other via a drain passage 95.

A communication passage 96 provides communication between the first supply passage 93 and the second supply passage 94. The communication passage 96 is provided with a bypass valve 80. When the bypass valve 80 opens, communication is provided between the hydraulic chambers 21A, 21B of the hydraulic cylinder 21 via the first supply passage 93, the second supply passage 94 and the communication passage 96.

The hydraulic control valve 40 controls the mode of communication among the discharge passage 92, the first supply passage 93, the second supply passage 94 and the drain passage 95, and the amounts of hydraulic fluid that flows through these oil passages, on the basis of the rotation angle of the spool 71. That is, when the state of supply and drainage of the hydraulic fluid to and from the hydraulic cylinder 21 is set to the above-described first state, the hydraulic control valve 40 connects the first supply passage 93 with the discharge passage 92, and connects the second supply passage 94 with the drain passage 95. Then, the amount of hydraulic fluid that is supplied from the first supply passage 93 to the first hydraulic chamber 21A of the hydraulic cylinder 21 is controlled by adjusting the area of communication between the first supply passage 93 and the discharge passage 92.

On the other hand, when the state of supply and drainage of the hydraulic fluid to and from the hydraulic cylinder 21 is set to the above-described second state, the hydraulic control valve 40 connects the first supply passage 93 with the drain passage 95, and connects the second supply passage 94 with the discharge passage 92. Then, the amount of hydraulic fluid that is supplied from the second supply passage 94 to the second hydraulic chamber 21B of the hydraulic cylinder 21 is controlled by adjusting the area of communication between the second supply passage 94 and the discharge passage 92.

The control unit 30 has not only the function of controlling the hydraulic control valve 40 on the basis of the operating state of the vehicle but also the function as a determination unit that determines whether there is an abnormality in the hydraulic control valve 40 and the function as a stop unit that stops generation of the steering assist force when the determination unit determines that there is an abnormality in the hydraulic control valve 40.

The bypass valve 80 provided on the communication passage 96 is kept closed in normal times, and is opened when an abnormality has occurred in the hydraulic control valve 40. In this way, communication is provided between the hydraulic chambers 21A, 21B of the hydraulic cylinder 21 via the first supply passage 93, the second supply passage 94 and the communication passage 96. As a result, the hydraulic pressure in the first hydraulic chamber 21A and the hydraulic pressure in the second hydraulic chamber 21B become equal to each other, and it is therefore possible to stop generation of the steering assist force. In this way, the communication passage 96 and the bypass valve 80 function as part of the stop unit for stopping generation of the steering assist force in the hydraulic cylinder 21 when an abnormality has occurred in the hydraulic control valve 40.

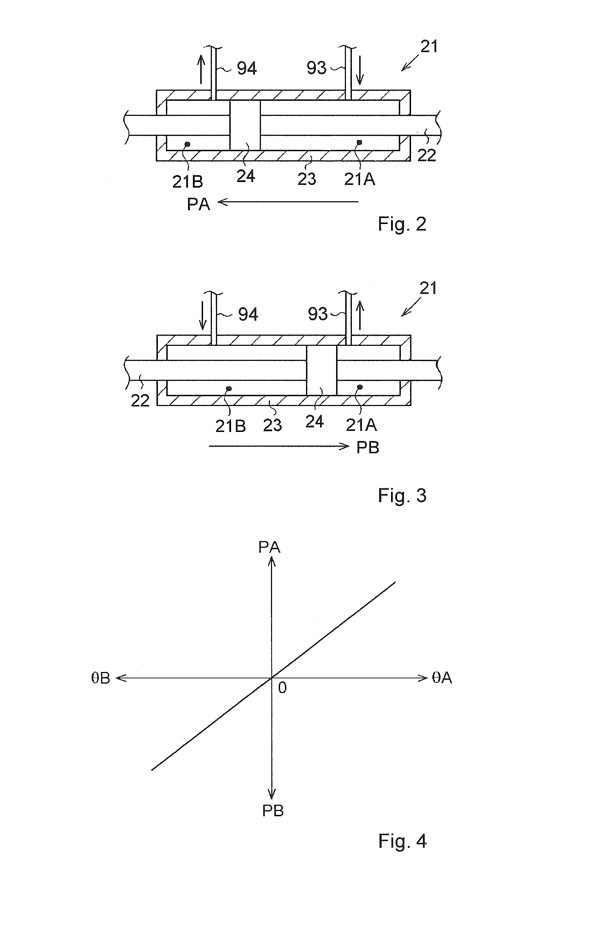

Next, the correlation between an actual rotation angle of the spool 71 and a steering assist force generated by the hydraulic cylinder 21 will be described with reference to FIG. 2 to FIG. 4. As shown in FIG. 2, when a steering assist force PA needs to be applied from the rack shaft 22 to the tie rods 22 by setting the state of supply and drainage of the hydraulic fluid to and from the hydraulic cylinder 21 to the first state to apply a force headed in a direction from the first hydraulic chamber 21A toward the second hydraulic chamber 21B to the piston 24, the spool 71 rotates in a first direction. As an

actual rotation angle $\theta A$ of the spool 71 in the first direction increases, the amount of hydraulic fluid supplied to the first hydraulic chamber 21A increases. As a result, as shown in FIG. 4, the steering assist force PA generated by the hydraulic cylinder 21 increases. In addition, the steering assist force PA is applied from the rack shaft 22 to the tie rods 3 and, as a result, the steered wheels 2 are steered to the right relative to a vehicle travelling direction.

As shown in FIG. 3, when a steering assist force PB needs to be applied from the rack shaft 22 to the tie rods 3 by setting the state of supply and drainage of the hydraulic fluid to and from the hydraulic cylinder 21 to the second state to apply a force headed in a direction from the second hydraulic chamber 21B toward the first hydraulic chamber 21A to the piston 24, the spool 71 rotates in a second direction that is opposite to the first direction. As the actual rotation angle $\theta B$ of the spool 71 in the second direction increases, the amount of hydraulic fluid supplied to the second hydraulic chamber 21B increases. As a result, as shown in FIG. 4, the steering assist force PB generated by the hydraulic cylinder 21 increases. In addition, the steering assist force PB is applied from the rack shaft 22 to the tie rods 3 and, as a result, the steered wheels 2 are steered to the left relative to the vehicle travelling direction.

When the steering wheel 1 is operated by a driver, the steering shaft 11 rotates together with the steering wheel 1. The rotation of the steering shaft 11 is converted into the axial linear motion of the rack shaft 22 by the rack-and-pinion mechanism 12, and the rack shaft 22 moves in the axial direction. In accordance with the movement of the rack shaft 22 in the axial direction, the steered angle of the steered wheels 2 is changed via the tie rods 3.

In addition, when the steering wheel 1 is operated, a force in the axial direction, that is, the steering assist force PA or the steering assist force PB, is applied to the rack shaft 22 through the above-described hydraulic control of the assist device 20. As a result, a force required to operate the steering wheel 1 in order to move the rack shaft 22 in the axial direction is reduced. That is, a force required to assist an operation of the steering wheel 1 is provided through hydraulic control of the assist device 20.

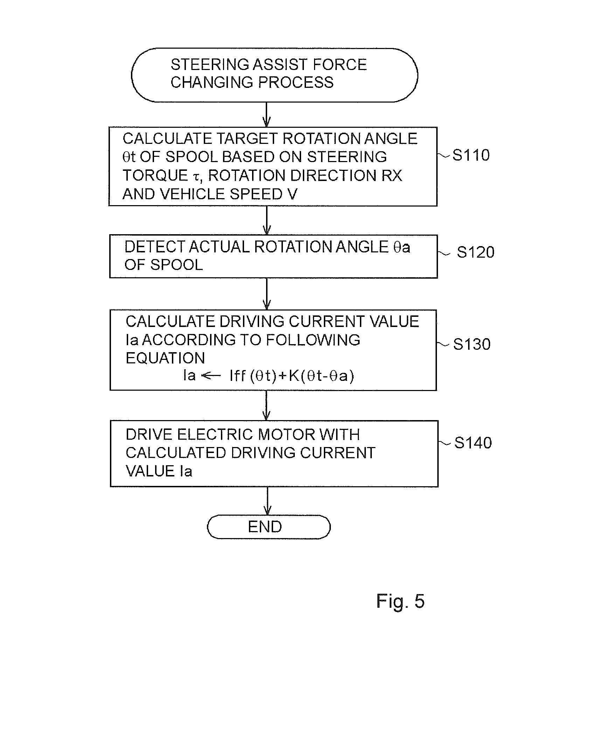

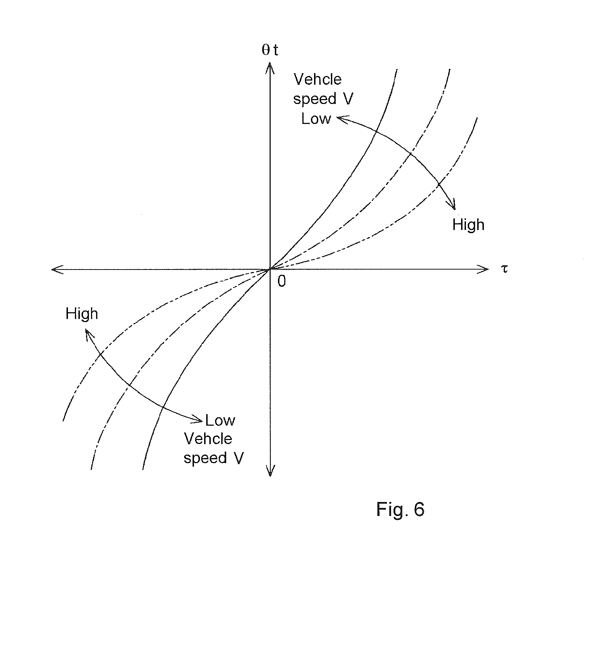

Next, the details of a steering assist force changing process for changing a steering assist force on the basis of the operating state of the vehicle will be described with reference to FIG. 5 and FIG. 6. In step S110, the control unit 30 calculates a target rotation angle $\theta t$ of the spool 71 on the basis of the steering torque $\tau$, the rotation direction RX and the vehicle speed V. As shown in FIG. 6, the target rotation angle $\theta t$ is calculated so as to be larger as the steering torque $\tau$ increases and as the vehicle speed V decreases. The memory of the control unit 30 stores a computation map that shows the correlation among the target rotation angle $\theta t$, the steering torque $\tau$ and the vehicle speed V as shown in FIG. 6. The control unit 30 calculates the target rotation angle $\theta t$ on

the basis of the map.

Subsequently, in step S120, the actual rotation angle $\theta a$ of the spool 71, which is detected by the rotation angle sensor 60, is input into the control unit 30. Then, in step S 130, the control unit 30 calculates a driving current value Ia for the electric motor 50, which is required to displace the spool 71 until the target rotation angle $\theta t$ is achieved, according to Equation 1 indicated below.

$$Ia = Iff(\theta t) + K(\theta t - \theta a) \qquad Equation\ 1$$

Here, in the right-hand side, the first term "Iff($\theta t$)" is a feedforward term, and the second term "K($\theta t$-$\theta a$)" is a feedback term (proportional term). In addition, the constant K is a proportional gain.

Then, in step S140, the control unit 30 drives the electric motor 50 at the driving current value Ia calculated according to Equation 1. That is, the control unit 30 executes feedback control of the driving current value Ia for the electric motor 50 such that the actual rotation angle $\theta a$ of the spool 71 coincides with the target rotation angle $\theta t$ of the spool 71.

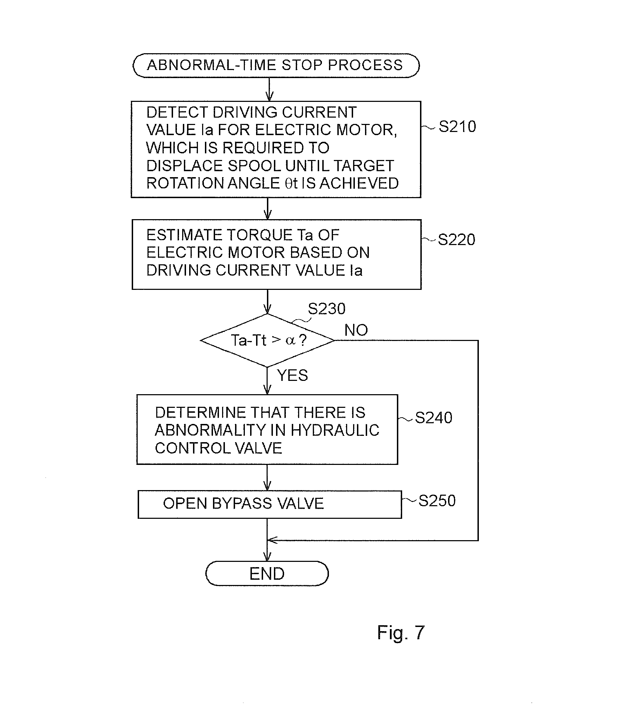

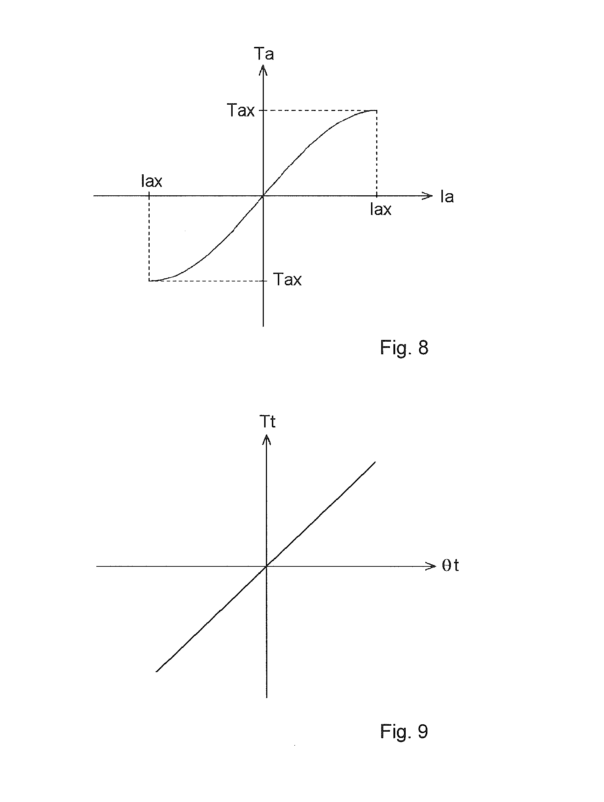

Next, the details of the process for stopping generation of a steering assist force at the time of an abnormality of the hydraulic control valve 40, that is, the details of abnormal-time stop process, will be described with reference to FIG. 7 and FIG. 8. Note that the abnormal-time stop process is executed in parallel with the steering assist force changing process.

In step S210, the control unit 30 detects the driving current value Ia for the electric motor 50, which is required when the spool 71 is displaced until the target rotation angle $\theta t$ is achieved. Subsequently, in S220, the control unit 30 estimates a torque Ta of the electric motor 50 at this time on the basis of the detected driving current value Ia for the electric motor 50. The driving current value Ia and the torque Ta have the correlation show in FIG. 8. That is, as the driving current value Ia increases, the torque Ta also increases. The memory of the control unit 30 stores a computation map that shows the correlation between the driving current value Ia and the torque Ta as shown in FIG. 8. The control unit 30 estimates the torque Ta on the basis of the map.

In step S230, the control unit 30 determines whether the difference between the torque Ta and a torque Tt is larger than a predetermined value $\alpha$. Note that the torque Tt is a torque that is required to rotate the spool 71 in normal times, and is a constant value.

When there is no abnormality in the hydraulic control valve 40, the torque Ta and the torque Tt coincide with each other or the difference therebetween is extremely small and ignorable. However, in the power steering system that is configured to execute feedback control, when an abnormality has occurred in the hydraulic control valve 40, for example, when the spool 71 is supported in a manner different from that in normal times such as when the rotation axis of the spool 71 is tilted, or when foreign matter is caught in the spool 71, there occurs a difference between the target rotation angle $\theta t$ and the actual rotation angle $\theta a$. Therefore, the driving current value Ia becomes larger than that in normal times. That is, the torque Ta is also becomes larger than that in normal times. Therefore, when the difference between the torque Ta and the torque Tt is larger than the predetermined value $\alpha$, it is determined that there is an abnormality in the hydraulic control valve 40. Note that the predetermined value $\alpha$ is set in advance as a difference between the above-described torques, at which it is clearly determined that there is an abnormality in the spool 71 and which is not exceeded even when the difference between the target rotation angle $\theta t$ and the actual rotation angle $\theta a$ becomes a maximum value.

In step S230, when the control unit 30 determines that the difference between the torque Ta and the torque Tt is larger than the predetermined value $\alpha$, the control unit 30 determines in step S240 that there is an abnormality in the hydraulic control valve 40.

Then, in step S250, the control unit 30 drives the bypass valve 80 such that the bypass valve 80 opens. That is, generation of the steering assist force is stopped by providing communication between the first hydraulic chamber 21A and the second hydraulic chamber 21B. On the other hand, when the control unit 30 determines in step S230 that the difference between the torque Ta and the torque Tt is smaller than or equal to the predetermined value $\alpha$, the control unit 30 ends the abnormal-time stop process.

With the above-described power steering system according to the present embodiment, the following advantageous effects are obtained. (1) The control unit 30 has the function as the determination unit, and estimates the torque Ta that is generated by the electric motor 50 on the basis of the driving current value Ia for the electric motor 50, which is required when the spool 71 is displaced until the target rotation angle $\theta t$ is achieved. Then, when the difference between the estimated torque Ta and the preset torque Tt is larger than or equal to the predetermined value $\alpha$, the control unit 30 determines that there is an abnormality in the hydraulic control valve 40. Therefore, it is possible to quickly detect that an abnormality has occurred in the hydraulic control valve 40 even during an operation of the vehicle.

(2) The control unit 30 has the function as the stop unit, and executes abnormal-time stop process of stopping generation of the steering assist force when it is determined that there is an abnormality in the hydraulic control valve 40. There is provided the bypass valve 80 that is able to provide communication between the hydraulic chambers 21A, 21B of the hydraulic cylinder 21, which are defined by the assist piston 24 for steering, and the control unit 30 executes the process of opening the bypass valve 80 in order to provide communication between the hydraulic chambers 21A, 21B, as the abnormal-time stop process. In this way, it is possible to eliminate the difference in hydraulic pressure between the hydraulic chambers 21A, 21B. As a result, it is possible to stop generation of the steering assist force in the hydraulic cylinder 21.

Note that the invention is not limited to the above-described embodiment, and may be implemented in the following modified examples. In addition, the embodiment to which the following modified examples are applied is not limited to the above-described embodiment, and the modified examples may be implemented in combination.

A range of values that the torque Ta of the electric motor 50 takes in normal times may be set in advance, and the control unit 30 may determine that there is an abnormality in the hydraulic control valve 40 when the torque Ta falls outside the range.

When an abnormality has occurred, for example, when the rotation axis of the spool 71 is tilted, as described above, the torque Ta that is required to displace the spool 71 becomes larger than that in normal times. On the other hand, when an abnormality has occurred, for example, when a failure has occurred in one of various sensors provided in the power steering system, such as the rotation angle sensor 60, the torque Ta that is required to displace the spool 71 is estimated as a value that is smaller than that in normal times. In such a case as well, it is desirable to determine that an abnormality has occurred in the hydraulic control valve 40 as in the case where an abnormality such as tilting of the rotation axis of the spool 71 has occurred.

That is, the fact that the torque Ta applied to the spool 71 falls outside the predetermined range may be determined on the basis of not only the fact that the torque Ta falls outside the range determined by an upper limit and a lower limit, but also the fact that the torque Ta shifts to a range that is above the upper limit, which may occur when an abnormality, for example, tilting of the rotation axis of the spool 71 has occurred, and the fact that the torque Ta shifts to a range that is below the lower limit, which may occur when an abnormality, for example, a failure of the rotation angle sensor 60 has occurred.

In addition, irrespective of whether the difference between the torque Ta and the torque Tt is larger than or equal to the predetermined value α, the control unit 30 may determine that there is an abnormality on the basis of the fact that the torque Ta is larger than the torque Tt, which may occur in the case of an abnormality, such as tilting of the rotation axis of the spool 71, or may determine that there is an abnormality on the basis of the fact that the torque Ta is smaller than the torque Tt, which may occur in the case of an abnormality, such as a failure of the rotation angle sensor 60.

Furthermore, the control unit 30 may set, in advance, the range of values that the driving current value Ia for the electric motor 50 takes in normal times, and may determine that there is an abnormality in the hydraulic control valve 40 when the driving current value Ia falls outside the range.

In addition, as described above, it may be determined that there is an abnormality on the basis of the fact that the driving current value Ia shifts a range that is above the upper limit, which may occur in the case of an abnormality, such as tilting of the rotation axis of the spool 71, or the fact that the driving current value Ia shifts to a range that is below the lower limit, which may occur in the case of an abnormality, such as a failure of the rotation angle sensor 60.

Furthermore, the control unit 30 may determine that there is an abnormality when the difference between the driving current value Ia and a driving current value It that corresponds to the torque Tt is larger than or equal to a predetermined value β. In addition, irrespective of whether the difference between the driving current value Ia and the driving current value It is larger than or equal to the predetermined value β, it may be determined that there is an abnormality on the basis of the fact that the driving current value Ia is larger than the driving current value It, which may occur in the case of an abnormality, such as tilting of the rotation axis of the spool 71, or may be determined that there is an abnormality on the basis of the fact that the driving current value Ia is smaller than the driving current value It, which may occur in the case of an abnormality, such as a failure of the rotation angle sensor 60.

Similarly, in the hydraulic control valve 40 in which the spool 71 is rotated by the electric motor 50, when a voltage value of the electric motor 50 is higher than a preset reference value, it may be determined that there is an abnormality, such as tilting of the rotation axis of the spool 71. Furthermore, when the voltage value of the electric motor 50 is lower than the preset reference value, it may be determined that there is an abnormality, such as a failure of the rotation angle sensor 60.

The abnormal-time stop process may be the process of stopping supply of the hydraulic fluid by stopping the operation of the hydraulic pump 25 that supplies the hydraulic fluid to the hydraulic cylinder 21. Note that, in order to stop the hydraulic pump 25 as the abnormal-time stop process as described above, the supply of electric power to the hydraulic pump 25 is stopped. In addition, when a pump driven by an engine is used instead of the hydraulic pump 25, an electromagnetic clutch may be interposed between an output shaft of the engine and a drive shaft of the pump and the electromagnetic clutch may be controlled so as to be disengaged at the time of an abnormality. Note that the process of stopping the supply of hydraulic fluid may be executed together with the process of opening the bypass valve 80.

In the abnormal-time stop process, when it is determined that there is an abnormality in the hydraulic control valve 40 and the bypass valve 80 is opened, it is desirable to stop the supply of the hydraulic fluid by the hydraulic pump 25 in order to reliably stop generation of the steering assist force. Furthermore, in this case, through the steering assist force changing process, the hydraulic control valve 40 desirably changes the state of supply and drainage of the hydraulic fluid to and from the hydraulic cylinder 21 to the neutral state.

The configuration in which the spool 71 is integrally formed with the shaft 41 has been described. However, as long as the shaft 41 and the spool 71 rotate in accordance with each other, another configuration may be employed. Specifically, a configuration in which the shaft 41 that is the output shaft of the electric motor 50 and the spool 71 are connected to each other via another power transmission device, such as a speed reducer, may also be employed. Note that, in this case, the electric motor 50 that serves as the driving unit is provided outside of the hydraulic control valve 40.

The hydraulic control valve 40 that rotates the spool 71 with the use of the electric motor 50 has been described. Alternatively, a hydraulic control valve having the following configuration may also be employed. A spool is supported by a housing of the hydraulic control valve so as to reciprocate in an axial direction of the spool, and the hydraulic control valve adjusts the state of supply and drainage of the hydraulic fluid to and from a hydraulic cylinder by changing a position of the spool in the axial direction. In this case, the spool is driven in the axial direction by an electromagnetic solenoid as the driving unit instead of the electric motor 50. Then, an actual position of the spool in the axial direction is detected, a target position of the spool is calculated on the basis of the operating state of the vehicle, and a driving current value for the electromagnetic solenoid is subjected to feedback control by a control unit such that the detected actual position coincides with the target position.

In addition, in the hydraulic control valve that controls the supply/drainage state of the hydraulic fluid by reciprocating the spool with the use of the electromagnetic solenoid as described above, it may be determined that there is an abnormality, for example, foreign matter is caught in the spool, when a thrust applied from the electromagnetic solenoid to the spool, a current value and a voltage value are larger than reference values that are set for the thrust, the current value and the voltage value. Note that, when the thrust applied from the electromagnetic solenoid to the spool, the current value and the voltage value are respectively smaller than the reference values that are respectively set, it may be determined that there is an abnormality, such as a failure of a detecting unit.

So-called P control is executed as feedback control. Alternatively, PI control, PD control or PID control may be executed. In addition, the feedforward term may be deleted from Equation 1.

Control other than feedback control may be employed as long as the actual rotation angle $\theta a$ coincides with the target rotation angle $\theta t$ according to the control.

In the hydraulic control valve 40, the electric motor 50, the rotation angle sensor 60 and the hydraulic control unit 70 are arranged in this order in the axial direction of the shaft 41. Alternatively, the order of arrangement of the electric motor 50, the rotation angle sensor 60 and the hydraulic control unit 70 may be changed.

The first hydraulic chamber 21A and the second hydraulic chamber 21B may be directly communicated with each other without opening the bypass valve 80.

In a hydraulic control valve that is configured such that a spool is placed in a neutral position when no torque is applied to the spool due to provision of a return spring, or the like, the spool adjusts the state of supply and drainage of the hydraulic fluid to and from a hydraulic cylinder on the basis of a displacement its displacement from the neutral position, and an electric motor displaces the spool from the neutral position by driving the spool with a predetermined torque.

In the thus configured hydraulic control valve, the correlation between the target rotation angle $\theta t$ of the spool and the torque Tt that corresponds to the target rotation angle is a correlation shown in FIG. 9. That is, as the target rotation angle $\theta t$ of the spool increases, the torque Tt that corresponds to the target rotation angle $\theta t$ increases. When the above-described abnormality occurs in the hydraulic control valve, a torque that is required to displace, that is, rotate, the spool of the hydraulic control valve from the neutral position by a predetermined displacement differs from that in normal times.

In a power steering system that includes the thus configured hydraulic control valve, when the correlation between a displacement of the spool and a torque that corresponds to the displacement in normal times is a normal correlation, the control unit determines that there is an abnormality in the hydraulic control valve when the correlation between the displacement and the torque that corresponds to the displacement differs from the normal correlation.

That is, when the correlation between a displacement of the spool and a torque that corresponds to the displacement is monitored and it is determined that there is an abnormality in the hydraulic control valve if the correlation differs from a correlation in normal times (hereinafter, referred to as "normal correlation"), it is possible to detect occurrence of an abnormality in the hydraulic control valve even during an operation of the vehicle.

At the time of an abnormality, such as tilting of the rotation axis of the spool 71 of the hydraulic control valve, a torque that is required to displace the spool from the neutral position increases. Therefore, even when a torque having the same magnitude as that in normal times is applied to the spool, a displacement of the spool at the time of the abnormality is smaller than that in normal times.

Thus, at the time of an abnormality, such as tilting of the rotation axis of the spool 71 of the hydraulic control valve, the control unit detects a torque that is required to displace the spool from the neutral position by a predetermined displacement with the use of the driving unit, and determines that there is an abnormality in the hydraulic control valve when the detected torque is larger than a torque that corresponds to the predetermined displacement in a normal correlation. In this way, it is possible to detect such an abnormality. In addition, the control unit detects a displacement at the time when a predetermined torque is applied to the spool with the use of the driving unit, and determines that there is an abnormality in the hydraulic control valve when the detected displacement is smaller than a displacement that corresponds to the predetermined torque in a normal correlation. In this way, it is possible to detect such an abnormality.

**Claims**

1. A power steering system, comprising:

   a hydraulic cylinder that generates a steering assist force;
   a hydraulic control valve that has a spool that adjusts a state of supply and drainage of hydraulic fluid to and from the hydraulic cylinder based on a position of the spool;
   a driving unit that displaces the spool by driving the spool with a predetermined driving force; and
   a determination unit that determines that there is an abnormality in the hydraulic control valve when the driving force for displacing the spool falls outside a predetermined range.

2. The power steering system according to claim 1, further comprising:

   a stop unit that executes an abnormal-time stop process of stopping generation of the steering assist force when the determination unit determines that there is an abnormality in the hydraulic control valve.

3. The power steering system according to claim 2, wherein
   the stop unit includes a bypass valve that is able to provide communication between a pair of hydraulic chambers of the hydraulic cylinder, which are defined by a piston for steering, and executes a process of opening the bypass valve to provide communication between the pair of hydraulic chambers, as the abnormal-time stop process.

4. The power steering system according to claim 1, wherein
   the hydraulic control valve adjusts the state of supply and drainage of the hydraulic fluid to and from the hydraulic cylinder by changing a rotation angle of the spool that is rotatably supported, and
   the driving unit includes an electric motor that rotates the spool,
   the power steering system further comprising:

   a detecting unit that detects an actual rotation angle of the spool; and
   a control unit that calculates a target rotation angle of the spool based on an operating state of a vehicle, and that executes feedback control of a driving current value for the electric motor such that the detected actual rotation angle coincides with the target rotation angle.

5. The power steering system according to claim 2, wherein
   the hydraulic control valve adjusts the state of supply and drainage of the hydraulic fluid to and from the hydraulic cylinder by changing a rotation angle of the spool that is rotatably supported, and
   the driving unit includes an electric motor that rotates the spool,
   the power steering system further comprising:

   a detecting unit that detects an actual rotation angle of the spool; and
   a control unit that calculates a target rotation angle of the spool based on an operating state of a vehicle, and that executes feedback control of a driving current value for the electric motor such that the detected actual rotation angle coincides with the target rotation angle.

6. The power steering system according to claim 3, wherein
   the hydraulic control valve adjusts the state of supply and drainage of the hydraulic fluid to and from the hydraulic cylinder by changing a rotation angle of the spool that is rotatably supported, and
   the driving unit includes an electric motor that rotates the spool,
   the power steering system further comprising:

   a detecting unit that detects an actual rotation angle of the spool; and
   a control unit that calculates a target rotation angle of the spool based on an operating state of a vehicle, and that executes feedback control of a driving current value for the electric motor such that the detected actual rotation angle coincides with the target rotation angle.

7. The power steering system according to claim 1, wherein
   the hydraulic control valve adjusts the state of supply and drainage of the hydraulic fluid to and from the hydraulic cylinder by changing a position of the spool in an axial direction of the spool, the spool being supported so as to be able to make a reciprocating motion in the axial direction, and
   the driving unit includes an electromagnetic solenoid that drives the spool in the axial direction,
   the power steering system further comprising:

a detecting unit that detects an actual position of the spool in the axial direction; and a control unit that calculates a target position of the spool based on an operating state of a vehicle, and that executes feedback control of a driving current value for the electromagnetic solenoid such that the detected actual position coincides with the target position.

8. The power steering system according to claim 2, wherein the hydraulic control valve adjusts the state of supply and drainage of the hydraulic fluid to and from the hydraulic cylinder by changing a position of the spool in an axial direction of the spool, the spool being supported so as to be able to make a reciprocating motion in the axial direction, and the driving unit includes an electromagnetic solenoid that drives the spool in the axial direction, the power steering system further comprising:

a detecting unit that detects an actual position of the spool in the axial direction; and a control unit that calculates a target position of the spool based on an operating state of a vehicle, and that executes feedback control of a driving current value for the electromagnetic solenoid such that the detected actual position coincides with the target position.

9. The power steering system according to claim 3, wherein the hydraulic control valve adjusts the state of supply and drainage of the hydraulic fluid to and from the hydraulic cylinder by changing a position of the spool in an axial direction of the spool, the spool being supported so as to be able to make a reciprocating motion in the axial direction, and the driving unit includes an electromagnetic solenoid that drives the spool in the axial direction, the power steering system further comprising:

a detecting unit that detects an actual position of the spool in the axial direction; and a control unit that calculates a target position of the spool based on an operating state of a vehicle, and that executes feedback control of a driving current value for the electromagnetic solenoid such that the detected actual position coincides with the target position.

10. The power steering system according to claim 1, wherein the determination unit determines that there is an abnormality in the hydraulic control valve when the driving force for displacing the spool or a value correlated with the driving force is larger than a reference value set in advance.

11. The power steering system according to claim 2, wherein the determination unit determines that there is an abnormality in the hydraulic control valve when the driving force for displacing the spool or a value correlated with the driving force is larger than a reference value set in advance.

12. The power steering system according to claim 3, wherein the determination unit determines that there is an abnormality in the hydraulic control valve when the driving force for displacing the spool or a value correlated with the driving force is larger than a reference value set in advance.

13. The power steering system according to claim 4, wherein the determination unit determines that there is an abnormality in the hydraulic control valve when the driving force for displacing the spool or a value correlated with the driving force is larger than a reference value set in advance.

14. The power steering system according to claim 5, wherein the determination unit determines that there is an abnormality in the hydraulic control valve when the driving force for displacing the spool or a value correlated with the driving force is larger than a reference value set in advance.

15. The power steering system according to claim 6, wherein the determination unit determines that there is an abnormality in the hydraulic control valve when the driving force for displacing the spool or a value correlated with the driving force is larger than a reference value set in advance.

16. The power steering system according to claim 7, wherein the determination unit determines that there is an abnormality in the hydraulic control valve when the driving force for displacing the spool or a value correlated with the driving force is larger than a reference value set in advance.

17. The power steering system according to claim 8, wherein the determination unit determines that there is an abnormality in the hydraulic control valve when the driving force for displacing the spool or a value correlated with the driving force is larger than a reference value set in advance.

18. The power steering system according to claim 9, wherein

the determination unit determines that there is an abnormality in the hydraulic control valve when the driving force for displacing the spool or a value correlated with the driving force is larger than a reference value set in advance.

Fig. 1

94    93    21

21B    24    23    21A    22

PA ⟵

Fig. 2

94    93    21

22    21B    23    24    21A

PB ⟶

Fig. 3

PA

θB ⟵    0    ⟶ θA

PB

Fig. 4

```
   ┌─────────────────────────────┐
   │    STEERING ASSIST FORCE    │
   │     CHANGING PROCESS        │
   └─────────────────────────────┘
                │
                ▼
  ┌───────────────────────────────────┐
  │ CALCULATE TARGET ROTATION ANGLE   │
  │ θt OF SPOOL BASED ON STEERING     │ ── S110
  │ TORQUE τ, ROTATION DIRECTION RX   │
  │ AND VEHICLE SPEED V               │
  └───────────────────────────────────┘
                │
                ▼
  ┌───────────────────────────────────┐
  │ DETECT ACTUAL ROTATION ANGLE θa   │ ── S120
  │ OF SPOOL                          │
  └───────────────────────────────────┘
                │
                ▼
  ┌───────────────────────────────────┐
  │ CALCULATE DRIVING CURRENT VALUE   │
  │ Ia ACCORDING TO FOLLOWING         │ ── S130
  │ EQUATION                          │
  │    Ia ← Iff (θt)+K(θt-θa)         │
  └───────────────────────────────────┘
                │
                ▼
  ┌───────────────────────────────────┐
  │ DRIVE ELECTRIC MOTOR WITH         │ ── S140
  │ CALCULATED DRIVING CURRENT        │
  │ VALUE Ia                          │
  └───────────────────────────────────┘
                │
                ▼
          ┌───────────┐
          │    END    │
          └───────────┘
```

Fig. 5

Fig. 6

ABNORMAL-TIME STOP PROCESS

DETECT DRIVING CURRENT
VALUE Ia FOR ELECTRIC MOTOR,
WHICH IS REQUIRED TO
DISPLACE SPOOL UNTIL TARGET
ROTATION ANGLE θt IS ACHIEVED ~ S210

ESTIMATE TORQUE Ta OF
ELECTRIC MOTOR BASED ON
DRIVING CURRENT VALUE Ia ~ S220

S230

$Ta-Tt > \alpha$ ? — NO

YES

DETERMINE THAT THERE IS
ABNORMALITY IN HYDRAULIC
CONTROL VALVE ~ S240

OPEN BYPASS VALVE ~ S250

END

Fig. 7

Fig. 8

Fig. 9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006306239 A